# EUROPÄISCHE PATENTSCHRIFT

(11) **EP 1 545 028 B1**
(45) Veröffentlichungstag und Bekanntmachung des Hinweises auf die Patenterteilung: **06.08.2008**
(21) Anmeldenummer: 04090494.8
(22) Anmeldetag: 17.12.2004
(51) Int. Cl.: H04B 10/158, H03L 7/00

(54) **Optischer Empfänger mit Regeleinrichtung mit einer schaltbaren Bandbreite**
Optical receiver with a control device with variable bandwidth
Récepteur optique avec dispositif de commande avec un largeur de bande variable

(30) Priorität: 19.12.2003 US 531011 P; 02.04.2004 US 817723
(43) Veröffentlichungstag der Anmeldung: 22.06.2005
(73) Patentinhaber: Avago Technologies Fiber IP (Singapore) Pte. Ltd., Singapore 768923 (SG)
(72) Erfinder: Harms, Torsten, 47906 Kempen (DE); Van Waasen, Stefan, 19248 Sollentuna (SE)
(74) Vertreter: Dilg, Haeusler, Schindelmann Patentanwaltsgesellschaft mbH

(56) Entgegenhaltungen:
- EP-A- 0 366 243
- DE-A1- 19 534 516
- US-A1- 2004 100 317
- US-B1- 6 476 681

## Beschreibung

Die Erfindung betrifft eine Empfängschaltung für optische Signale. Insbesondere betrifft die Erfindung eine Regeleinrichtung mit einer schaltbaren Bandbreite, die in einem optischen Empfänger eingesetzt wird, wobei die Regeleinrichtung Teil eines Regelkreises zur Offset-Regelung, zur Regelung der Signalamplitude oder zur Regelung des Duty-Cycles ist.

### Hintergrund der Erfindung

Es sind Kommunikationssysteme mit Regelsystemen bekannt, die hinsichtlich ihrer Bandbreite schaltbar sind. Beispiele für solche Regelsysteme in Kommunikationssystemen betreffen eine Offset-Kompensation, eine Amplituden-Kontrolle und eine Duty-Cycle-Kontrolle. In unterschiedlichen Modi werden dabei häufig unterschiedliche Bandbreiten benötigt, die zeitlich direkt aneinander grenzen. Beispielsweise kann es sinnvoll sein, beim Einschwingen eines betrachteten Systems eine erste Bandbreite und nach einem Einschwingen eine zweite Bandbreite bereitzustellen.

Es ist dabei anzustreben, dass durch die Umschaltung der Bandbreite des Regelsystems möglichst wenig Störungen durch den Wechsel der Bandbreite erzeugt werden.

Zur Umschaltung der Bandbreite in Regelsystemen ist es bekannt, die Bandbreite eines integrierenden Elementes des Regelsystems zu schalten. Das integrierende Element wird in der Regel durch eine Stromquelle realisiert, die eine Kapazität auflädt. Seine Bandbreite kann in einfacher Weise beeinflusst werden, ohne dass dabei in die eigentlichen signalverarbeitenden Teile eingegriffen werden muss. Zur Beeinflussung der Bandbreite eines integrierenden Elements sind zwei Verfahren bekannt.

Die Bandbreite eines integrierenden Elementes kann zum einen umgeschaltet werden, indem eine Änderung des Stroms, der eine Auf- bzw. Entladung des integrierenden Elementes bewirkt, erfolgt. Ein Umschalten des Stroms führt allerdings nachteilig in den einzelnen Schaltungsteilen zu einer starken Änderung der Arbeitspunkte und somit zu einer starken Störung auf die Regelschleife.

Des Weiteren ist es bekannt, zur Änderung der Bandbreite eines integrierenden Elementes einer Regelschleife die Größe der Kapazität zu ändern bzw. zu schalten. Dies führt bei einer Vergrößerung der Bandbreite, d.h. einem Wegschalten von Kapazität, nicht zu Problemen. Bei einer Verkleinerung der Bandbreite, d.h. bei einem Hinzuschalten von Kapazität, ergibt sich allerdings das Problem, dass die hinzuzuschaltende Kapazität nicht auf die gleiche Spannung aufgeladen ist wie die bereits vorhandene Kapazität. Dies führt dazu, dass im Zuschaltzeitpunkt ein Ladungsausgleich zwischen den Kapazitäten erfolgt. Damit ändert sich aber im Umschaltzeitpunkt nachteilig die Spannung über der Kapazität, so dass wiederum eine Störung auf die Regelschleife entsteht.

Zum Empfang und zur Regenerierung von optischen Signalen nach Durchlaufen einer Übertragungsstrecke sind digitale optische Empfänger bekannt, die aus einem analogen Eingangsteil, in dem das optische Signal in ein analoges elektrisches Signal gewandelt wird, und einem digitalen Signalverarbeitungsteil, in dem das analoge Signal in ein digitales Datensignal mit normierter Amplitude und Taktinformation regeneriert wird, bestehen. In dem analogen Teil wird das empfangene optische Signal mittels einer Fotodiode in einem Fotostrom gewandelt und in einem Vorverstärker verstärkt.

Aus der EP-A-0366243 ist eine Vorrichtung bekannt, die eine optische Leistungsmessung und einen optische Signaldetektion kombiniert. Dabei wird das Signal einer einzigen Photodiode eine Einrichtung zur optischen Leistungsmessung und einer optischen Empfangseinrichtung zugeführt, die jeweils einen Transimpedanzverstärker umfassen.

EP-A-1 261 152 offenbart einen geregelten optischen Empfänger nach dem Stand der Technik.

### Aufgabe der Erfindung

Der vorliegenden Erfindung liegt die Aufgabe zugrunde, eine optische Empfängerschaltung mit einer Regeleinrichtung mit einer schaltbaren Bandbreite zur Verfügung zu stellen, die eine Umschaltung der Bandbreite ohne die Entstehung von Störungen auf ein Regelsystem ermöglicht bzw. solche Störungen minimiert.

### Zusammenfassung der Erfindung

Diese Aufgabe wird erfindungsgemäß durch eine optische Empfängerschaltung mit den Merkmalen des Anspruchs 1 gelöst.

Danach umfasst die optische Empfängerschaltung eine Regeleinrichtung mit einer schaltbaren Bandbreite, die aufweist: ein integrierendes Element mit einer ersten Kapazität, die durch mindestens einen Strom aufgeladen und entladen wird; mindestens eine zweite Kapazität, die über einen ersten Schalter parallel zu der ersten Kapazität schaltbar ist; und mindestens einen Spannungsfolger, über den die an der ersten Kapazität anliegende Spannung der zweiten Kapazität zuführbar ist. Dabei ist der erste Schalter geöffnet, wenn mittels des Spannungsfolgers die an der ersten Kapazität anliegende Spannung der zweiten Kapazität zugeführt wird. Dagegen ist der erste Schalter geschlossen, wenn die zweite Kapazität parallel zur ersten Kapazität geschaltet ist.

Die Empfängerschaltung umfasst des weiteren einen Nachverstärker, dessem einen Eingang das in einem Vorverstärker verstärkte Signal einer beleuchtbaren Photodiode (oder anderen Wandlereinrichtung) und dessem anderen Eingang das in einem weiteren Vorverstärker verstärkte Signal einer unbeleuchtbaren Photodiode (oder anderen Wandlereinrichtung) zugeführt wird, wobei letztere das elektrische Verhalten der beleuchtbaren Photodiode im beleuchtungsfreien Fall nachbildet. Die Regelstrecke umfasst einen der Vorverstärker und den Nachverstärker, wobei das Ausgangssignal des Nachverstärkers der Regeleinrichtung als Regelgröße zugeführt wird. Der Ausgang der Regeleinrichtung, d.h. die eine Stellgröße darstellende Ausgangsspannung der Regeleinrichtung, regelt ein Stellglied der Regelstrecke. Ein solches Stellglied ist beispielsweise eine regelbare Stromquelle, die den Strom durch den Vorverstärker der Regelstrecke bereitstellt.

Die Erfindung vermeidet die Entstehung von Störungen bei der Hinzuschaltung einer Kapazität, indem über den Spannungsfolger die an der ersten Kapazität anliegende Spannung der zweiten Kapazität zugeführt wird. Der Strom, den der Spannungsfolger dabei liefern muss, hängt direkt vom Strom der Regelung, von der zuzuschaltenden Kapazität, den Einschwingzeiten sowie dem Umschaltzeitpunkt ab. Da die zweite Kapazität aufgrund des Nachführens der Spannung der ersten Kapazität durch den Spannungsfolger die gleiche Spannung wie die erste Kapazität aufweist, erfolgt bei einem Umschalten im Wesentlichen kein Ladungsausgleich zwischen den beiden Kapazitäten. Damit findet auch keine oder eine nur sehr geringe Störung in dem Regelsystem statt.

Die Erfindung ermöglicht somit das Hinzuschalten einer Kapazität, und damit die Verkleinerung der Bandbreite eines betrachteten Systems, in einfacher Weise unter Verwendung eines Spannungsfolgers, der vor dem Zuschalten der Kapazität der hinzuzuschaltenden Kapazität die an der bereits vorhandenen Kapazität anliegende Spannung zuführt, so dass zum Umschaltezeitpunkt bereits eine im Wesentlichen identische Spannung an den beiden Kapazitäten vorliegt.

Ein erster Schalter, über den die zusätzliche (zweite) Kapazität der ersten Kapazität hinzuschaltbar ist, wird dabei erst dann geschlossen, wenn die zweite Kapazität parallel zur ersten Kapazität geschaltet wird. Zuvor, d.h. beim Nachführen der Spannung mittels des Spannungsfolgers ist dieser Schalter dagegen geöffnet.

In einer bevorzugten Ausgestaltung der Erfindung ist der Spannungsfolger über einen zweiten Schalter mit der zweiten Kapazität verbunden. Beim Nachführen der Spannung ist dieser zweite Schalter geschlossen. Wenn dagegen die zusätzliche Kapazität hinzugeschaltet wird, wird der zweite Schalter geöffnet.

Nach Zuschalten der weiteren Kapazität wird der Spannungsfolger bevorzugt deaktiviert, so dass kein zusätzlicher Stromverbrauch durch den Spannungsfolger erzeugt wird. Sofern die zweite Kapazität zur Vergrößerung der Bandbreite zu einem späteren Zeitpunkt weggeschaltet wird, kann der Spannungsfolger dann erneut aktiviert werden.

Es wird darauf hingewiesen, dass die beschriebene Zuschaltung von weiteren Kapazitäten unter Verwendung eines Spannungsfolgers naturgemäß in beliebig vielen Stufen erfolgen kann. Hierzu kann vorgesehen sein, dass statt einer zusätzlichen Kapazität eine Mehrzahl von zusätzlichen Kapazitäten vorgesehen sind, die jeweils über erste Schalter mit der ersten Kapazität parallel geschaltet werden können und über zweite Schalter mit einem Spannungsfolger verbindbar sind. Dabei kann sowohl vorgesehen sein, dass die Ausgangsspannung eines Spannungsfolgers über zweite Schalter einer Mehrzahl von weiteren Kapazitäten zuführbar ist. Zum anderen ist auch denkbar, dass eine Vielzahl von Spannungsfolgern vorgesehen sind, die jeweils mit einer weiteren Kapazität verbunden sind.

Die an der Kapazität anliegende Spannung stellt die Stellgröße für ein Stellglied eines Regelkreises dar. In dem Regelkreis findet dabei eine Regelung dahingehend statt, dass die an der ersten Kapazität anliegende Spannung konstant geregelt wird. Der mindestens eine Strom, der die erste Kapazität auflädt und entlädt, stellt dabei eine Regelgröße des Regelkreises dar.

Zur Klarstellung der verwendeten Begriffe wird auf Folgendes hingewiesen. Als Stellgröße wird eine Größe bezeichnet, die die steuernde Wirkung einer Regeleinrichtung auf eine Regelstrecke überträgt. Die Stellgröße ist dabei eine Eingangsgröße der Regelstrecke und eine Ausgangsgröße der Regeleinrichtung. Als Regelgröße wird eine Prozessgröße bezeichnet, die zum Zwecke des Regelns erfasst und der Regeleinrichtung zugeführt wird. Der Regelgröße ist in der Regel ein Ist-Wert zugeordnet oder aus einer oder mehreren Regelgrößen kann ein Ist-Wert abgeleitet werden. Eine Störgröße wirkt auf den zu regelnden Prozess und führt zu einer Veränderung der Regelgröße. Die Regelstrecke ist der zu beeinflussende Prozess oder das zu beeinflussende System. Der Regelstrecke ist ein Stellglied zugeordnet, das über die Stellgröße beeinflussbar ist. Das Stellglied hat dabei die Funktion einer Korrekturgröße.

Die Realisierung der Regeleinrichtung erfolgt in der einem optischen Empfänger. Ein optischer Empfänger dient dem Empfang und der Regeneration von optischen Signalen nach Durchlaufen einer optischen Übertragungsstrecke. In einem analogen Teil eines solchen optischen Empfängers wird das empfangene optische Signal mittels einer Empfangseinrichtung wie z.B. einer Fotodiode in ein analoges Stromsignal gewandelt und dieses in einem Vorverstärker verstärkt. Ein Regelungsbedarf besteht insbesondere hinsichtlich einer Offset-Regelung, einer Amplitudenkontrolle und einer Duty-Cycle-Kontrolle.

### Kurze Beschreibung der Zeichnungen

Die Erfindung wird nachfolgend unter Bezugnahme auf die Figuren anhand mehrerer Ausführungsbeispiele näher erläutert. Es zeigen:
- Figur 1: schematisch einen Regelkreis mit einem Stellglied, einer Regelstrecke und einer Regeleinrichtung, die eine erste Kapazität, einen Spannungsfolger und eine hinzuschaltbare zweite Kapazität umfasst;
- Figur 2: eine optische Empfängerschaltung zur Wandlung eines optischen Signals in ein analoges elektrisches Signal.

### Beschreibung mehrerer bevorzugter Ausführungsbeispiele

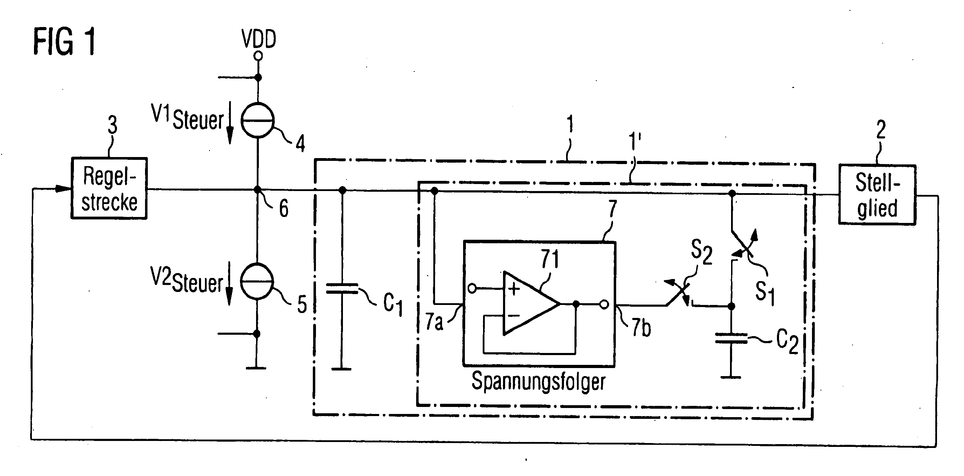

Die Figur 1 zeigt einen Regelkreis mit einer schaltbaren Bandbreite. Der Regelkreis besteht aus einer Regeleinrichtung 1, einem Stellglied 2 und einer Regelstrecke 3. In einen Bezugspunkt 6 der Regelstrecke werden zwei Steuerspannungen 1_{Steuer}, V2_{Steuer} bzw. entsprechende Ströme eingespeist, die durch Stromquellen 4, 5 bereitgestellt werden.

Die Regeleinrichtung 1 weist eine als Integrator wirkende erste Kapazität C1 sowie eine Zusatzeinrichtung 1' auf, die aus einem Spannungsfolger 7, einer zweiten Kapazität C2 sowie zwei Schaltern S1, S2 besteht. Der Spannungsfolger 7 weist einen Operationsverstärker 71 auf, dessen Ausgangsspannung zum invertierenden Eingang des Operationsverstärkers 71 zurückgeführt wird. Bei dieser Schaltung besitzen die Eingangsspannung und die Ausgangsspannung des Operationsverstärkers 71 den gleichen Wert, d.h. die Ausgangsspannung folgt der Eingangsspannung, woraus sich der Name "Spannungsfolger" begründet. Die Systemverstärkung liegt bei eins.

Die erste Kapazität C1 ist mit seinem ersten Anschluss an den Bezugspunkt 6 angeschlossen und mit seinem zweiten Anschluss mit Masse verbunden. Der Eingang 7a des Spannungsfolgers 7 ist mit dem ersten Anschluss der ersten Kapazität C1 verbunden. Der Ausgang 7b des Spannungsfolgers 7 ist über einen der Schalter S2 mit der zweiten Kapazität C2 verbunden. Über den weiteren Schalter S1 ist die zweite Kapazität C2 parallel zu der ersten Kapazität C1 schaltbar.

Die Funktionsweise des dargestellten Regelsystems ist wie folgt. Über die eine Stromquelle 4 wird die erste Kapazität C1 mit einem getakteten Strom beaufschlagt, der zu einer Aufladung der Kapazität C1 führt. Gleichzeitig wird die Kapazität C1 über die zweite Stromquelle 5 mit einem weiteren getakteten Strom beaufschlagt, der zu einer Entladung der Kapazität C1 führt. Die Kapazität C1 wirkt als Integrator. Sofern die durch die beiden Stromquellen 4, 5 bereitgestellten Ströme zueinander invers sind, findet keine Entladung bzw. Aufladung der Kapazität C1 statt und es liegt ein stabiler Zustand vor. Sofern die durch die beiden Stromquellen 4, 5 Signale bereitgestellten Ströme nicht zueinander invers sind, erfolgt ein langsames Ent- oder Aufladen der Kapazität C1.

Der Spannungsfolger 7 und die zweite Kapazität C2 seien zunächst nicht beachtet. Die an der Kapazität C1 anliegende Spannung stellt eine Stellgröße des Regelsystems dar und wird dem Stellglied 2 zugeführt. Das Stellglied 2 beeinflusst die sich anschließende Regelstrecke 3. Die Regelung beeinflusst die beiden von den Stromquellen 4, 5 bereitgestellten Signale V1_{Steuer}, V2_{Steuer}, so dass diese eine Regelgröße bereitstellen. Das System ist ausgeregelt, wenn die Spannung über der Kapazität C1 konstant ist. Dies ist wie erläutert dann erreicht, wenn die beiden Signale V1_{Steuer}, V2_{Steuer} zueinander invers sind, d.h. bei gleicher Amplitude um 180° phasenverschoben und mit umgekehrten Vorzeichen versehen sind.

Solange die zweite Kapazität C2 nicht zugeschaltet ist, ist der Schalter S1 geöffnet. Der Schalter S2 ist dagegen geschlossen. Dies führt dazu, dass die an der ersten Kapazität C1 anliegende Spannung mittels des Spannungsfolgers 7 an die zweite Kapazität C2 nachgeführt wird. Die Spannung der zweiten Kapazität C2 folgt der Spannung der ersten Kapazität C1. Bei einem Zuschalten der zweiten Kapazität C2 wird der Schalter S2 geöffnet, der Schalter S1 dagegen geschlossen. Die zweite Kapazität C2 ist nun mit der ersten Kapazität C1 parallel geschaltet. Dies führt dazu, dass die Bandbreite der Regeleinrichtung und damit des Regelsystems insgesamt sich verringert. Es liegt eine langsamere Regelcharakteristik vor. Ein Zuschalten der weiteren Kapazität C2 erfolgt beispielsweise nach einer Anfangszeit ΔT, nach der das System eingeschwungen ist.

Zum Umlegen der Schalter S1, S2 ist eine geeignete Steuervorrichtung (nicht dargestellt) vorgesehen. Beispielsweise nimmt eine solche Steuervorrichtung eine Signalerkennung ("signal detect") vor und erfolgt ein Zuschalten der weiteren Kapazität C2 nach Vorliegen einer solchen Signalerkennung.

Aufgrund des Spannungsfolgers 7 ist die Spannung an der zweiten Kapazität C2 zum Zeitpunkt des Zuschaltens im Wesentlichen identisch mit der Spannung an der ersten Kapazität C1. Es findet beim Zuschalten somit kein Ladungsausgleich zwischen den beiden Kapazitäten C1, C2 statt. Hierdurch wird erreicht, dass keine Störung im System und auf die Regelschleife erfolgt.

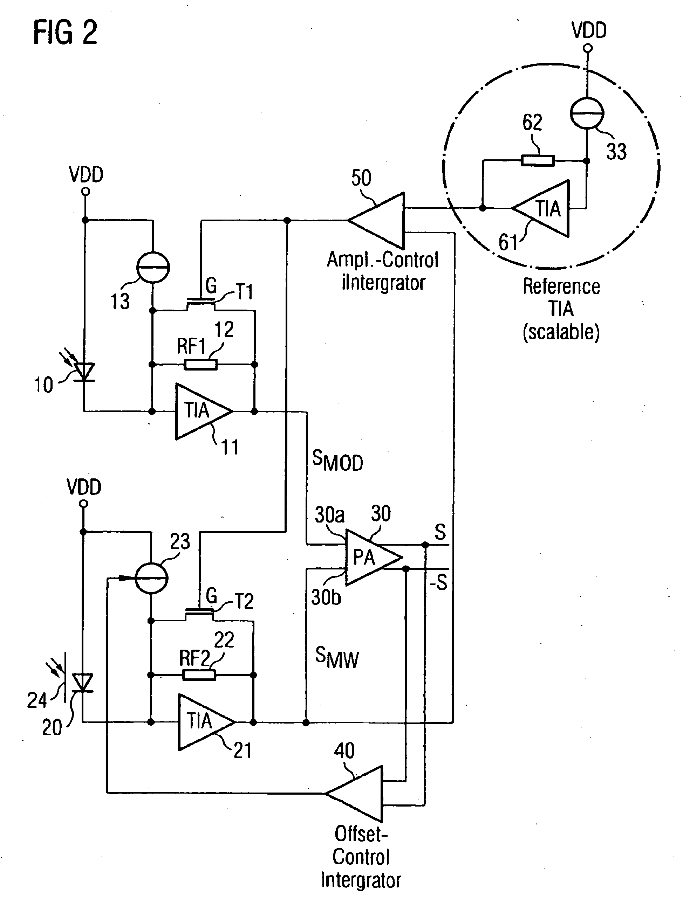

Die in der Figur 1 beschriebene Regelstrecke wird zur Regelung von Signalen in optischen Empfängerschaltungen mit einer optoelektronischen Wandlereinrichtung (z. B. einer Photodiode) und einem nachgeschalteten Vorverstärker eingesetzt. Eine solche optische Empfängerschaltung eines digitalen optischen Empfängers ist in der Figur 2 dargestellt.

Gemäß der Figur 2 ist ein erster optoelektronischer Wandler 10 in Form einer Photodiode vorgesehen, der ein optisches Informationssignal in ein elektrisches Signal umwandelt. Das elektrische Signal wird in einem Vorverstärker 11, 12 verstärkt und dem einen Eingang 30a eines Nachverstärkers 30 (post amplifier) zugeführt, der ein Differenzverstärker ist. Bei dem Vorverstärker handelt es sich bevorzugt um einen Transimpedanzverstärker, der aus einem Spannungsverstärker 11 und einem Gegenkopplungswiderstand 12 besteht. Dem im Wesentlichen rechteckförmige Ausgangssignal der Photodiode 10 wird am Eingang des Vorverstärkers ein konstanter Strom einer festen Stromquelle 13 überlagert, die einen geeigneten Offset am Eingang des Spannungsverstärkers 11 bereitstellt.

Des weiteren ist ein Feldeffekttransistor T1 vorgesehen, der parallel zu dem Gegenkopplungswiderstand 12 geschaltet ist, so dass über die an dem Gate-Anschluss des Transistors T1 anliegende Spannung der Gesamtwiderstand und damit die Amplitude des Ausgangssignals des Vorverstärkers eingestellt werden kann. Statt eines Feldeffekttransistors kann auch ein bipolarer Transistor verwendet werden. Auch kann die Gegenkopplungswiderstand in anderer Weise eingestellt werden.

Es ist des weiteren ein im Wesentlichen identischer Schaltungsteil mit einer Photodiode 20, einem Spannungsverstärker 21, einem Gegenkopplungswiderstand 22, einer Stromquelle 23 und einem Transistor T2 vorgesehen. Bei diesem Schaltungsteil ist die Photodiode 20 jedoch durch eine Blende 24 oder dergleichen abgedeckt. Es handelt sich um eine "Dummy-Photodiode", die das elektrische Verhalten der "sehenden" Photodiode 10 im beleuchtungsfreien Fall elektrisch nachbildet. Auf diese Weise können hochfrequente Störungen weitestgehend unterdrückt werden. Ein weiter Unterschied besteht darin, dass die Stromquelle 23 nicht wie die obere Stromquelle 13 konstant ist. Es handelt sich vielmehr um eine regelbare Stromquelle 13, die ein Regelsignal von einem Offset-Control-Integrator 40 erhält, wie noch erläutert werden wird.

Das Ausgangssignal S_{MOD} des oberen Vorverstärkers 11 und das Ausgangssignal S_{MW} des unteren Vorverstärkers 21 werden den beiden Eingängen 30a, 30b des Nachverstärkers 30 zugeführt. Da kein optisches Signal durch die Photodiode 20 detektiert wird, weist das an dem Eingang 30b anliegende Signal S_{MW} abgesehen von Störfrequenzen einen konstanten Wert auf. Das Signal S_{MOD} stellt dagegen das rechteckförmig modulierte Informationssignal dar.

Es ist nun anzustreben, zur Offset-Korrektur des von der Photodiode 10 abgegebenen und im Vorverstärker 11 verstärkten modulierten Signals S_{MOD} ein "Korrektursignal" S_{MW} in den unteren Eingang 30b des Nachverstärkers 30 einzuspeisen, dessen Größe genau 50 % des Signalhubs des Signals S_{MOD} am anderen Eingang 30a des Nachverstärkers 30 darstellt. Der Nachverstärker 30 stellt an seinem Ausgang ein Offsetkorrigiertes, dem optischen Signal der Photodiode 10 entsprechendes Ausgangssignal S und ein dazu invertiertes Signal -S bereit. Es findet dann eine differenzielle Ansteuerung der darauffolgenden Komponenten statt.

Um zu erreichen, dass der Pegel S_{MW} am Ausgang des Vorverstärkers 21 gerade gleich dem Mittelwert des Signalhubs des Datenstromsignals S_{MOD} ist, erfolgt eine Regelung. Dies ist schematisch durch den Offset-Control-Integrator 40 dargestellt. In Abhängigkeit von dem differenziellen Ausgangssignal S, - S des Nachverstärkers 30 wird die Stromquelle 23 derart geregel, dass das am einen Eingang 30b des Nachverstärkers 30 anliegende Signal S_{MW} gerade bei 50% des Signalhubs des Nutzsignals liegt. Für diesen Fall werden am Ausgang des Nachverstärkers 30 zwei exakt zueinander inverse Signale S, -S erzeugt. Anderenfalls ist das Ausgangssignal verzerrt. Nachfolgende Komponenten werden differenziell angesteuert, d.h. die nachfolgenden Komponenten werten jeweils die Differenz zwischen zwei Eingangssignalen aus. Da die Signale invers zueinander sind, kann durch die nachfolgenden Komponenten eine doppelte Amplitude ausgewertet werden. Hierdurch wird die Störanfälligkeit reduziert und die Stabilität erhöht.

In den Offset-Control-Integrator 40 ist die Regeleinrichtung 1 der Figur 1 integriert. Dem Stellglied 2 entspricht dabei die regelbare Stromquelle 23. Die Regelstrecke 3 wird durch den Vorverstärker 21 und den Nachverstärker 30 gebildet. Die Signale V1_{Steuer} und V2_{Steuer} der Figur 1 werden durch die beiden Ausgangssignale S, -S des Nachverstärkers 30 bereitgestellt. Mit diesen Signalen S, -S wird die Kapazität C1 bzw. nach Zuschaltung der Kapazität C2 auch die Kapazität C2 beaufschlagt. Die Regelstrecke ist für den Fall ausgeregelt, dass die beiden am Bezugspunkt 6 anliegenden Signale S, -S vollständig differenziell ausgebildet sind. Für diesen Fall ist die Spannung an der Kapazität C1, C2 konstant. Sofern dies nicht der Fall ist, ändert sich die Spannung an der Kapazität und wird diese Spannungsänderung über das Stellglied 2 bzw. die regelbare Stromquelle 23 auf den Regelkreis übertragen, bis die Signale S, -S am Ausgang des Nachverstärkers 30 zueinander invers sind bzw. der konstante Pegel am Ausgang des Vorverstärkers 21 gerade bei 50% des Signalhubs des Nutzsignals liegt.

In der Schaltung der Figur 2 findet darüber hinaus eine Amplitudenregelung statt. So wird der konstante Ausgangswert des Spannungsverstärkers 21 in einem weiteren Integrator 50 mit einem Referenzwert verglichen, der über eine weitere Stromquelle 33 und einen Transimpedanzverstärker mit Elementen 61, 62 bereitgestellt wird. In Abhängigkeit von diesem Vergleich wird die Spannung an dem Gate-Anschluss des jeweiligen Transistors T1, T2 geändert, wodurch der Gegenkopplungswiderstandswert des Transimpedanzverstärkers sich verändert, was zu einer veränderten Amplitude des Nutzsignals führt.

## Patentansprüche

1. Optische Empfängerschaltung mit
- einer beleuchtbaren Photodiode (10);
- einem ersten Vorverstärker (11) zur Verstärkung des Ausgangssignals der beleuchtbaren Photodiode (10); einer unbeleuchtbaren Photodiode (20), die das elektrische Verhalten der beleuchtbaren Photodiode (10) im beleuchtungsfreien Fall nachbildet;
- einem zweiten Vorverstärker (21) zur Verstärkung des Ausgangssignals der unbeleuchtbaren Photodiode (20);
- einen Nachverstärker (30) mit einem ersten Eingang (30a) und einem zweiten Eingang (30b), wobei dem ersten Eingang (30a) das in dem ersten Vorverstärker (11) verstärkte Signal der beleuchtbaren Photodiode (10) und dem zweiten Eingang (30b) das in dem zweiten Vorverstärker (21) verstärkte Signal der unbeleuchtbaren Photodiode (20) zugeführt wird, und
- einer Regeleinrichtung, die umfasst:
o ein integrierendes Element mit einer ersten Kapazität (C1), die durch das Ausgangssignal des Nachverstärkers (30) ge- und entladen wird,
o mindestens eine zweite Kapazität (C2), die über einen ersten Schalter (S1) parallel zu der ersten Kapazität (C1) schaltbar ist,
o mindestens einen Spannungsfolger (7), über den die an der ersten Kapazität (C1) anliegende Spannung der zweiten Kapazität (C2) zuführbar ist, wobei
o der erste Schalter (S1) geöffnet ist, wenn mittels des Spannungsfolgers (7) die an der ersten Kapazität (C1) anliegende Spannung der zweiten Kapazität (C2) zugeführt wird, und
o der erste Schalter (S1) geschlossen ist, wenn die zweite Kapazität (C2) parallel zur ersten Kapazität (C1) geschaltet ist; und wobei
- einer der Vorverstärker (21) und der Nachverstärker (30) eine Regelstrecke ausbilden,
- das Ausgangssignal des Nachverstärkers (30) der Regeleinrichtung als Regelgröße zugeführt wird und
- der Ausgang der Regeleinrichtung ein Stellglied (23) der Regelstrecke regelt.

2. Optische Empfängerschaltung nach Anspruch 1, wobei das Stellglied durch eine regelbare Stromquelle (23), die den Strom durch den Vorverstärker (21) der Regelstrecke bereitstellt, gebildet ist.

3. Optische Empfängerschaltung nach Anspruch 1 oder 2, wobei zusätzlich eine Regelung der Amplitude der durch die Vorverstärker (11, 21) bereitgestellten Signale erfolgt.

4. Regeleinrichtung nach einem der Ansprüche 1 bis 3, wobei zusätzlich ein zweiter Schalter (S2) zwischen dem Spannungsfolger (7) und der zweiten Kapazität (C2) vorgesehen ist.

5. Regeleinrichtung nach Anspruch 4, wobei der erste Schalter (S1) geöffnet und der zweite Schalter (S2) geschlossen ist, wenn mittels des Spannungsfolgers (7) die an der ersten Kapazität (C1) anliegende Spannung der zweiten Kapazität (C2) zugeführt wird.

6. Regeleinrichtung nach Anspruch 4, wobei der erste Schalter (S1) geschlossen und der zweite Schalter (S2) geöffnet ist, wenn die zweite Kapazität (C2) parallel zur ersten Kapazität (C1) geschaltet ist.

7. Regeleinrichtung nach einem der vorangehenden Ansprüche, wobei der Spannungsfolger (7) bei parallel zur ersten Kapazität (C1) geschalteter zweiter Kapazität (C2) deaktiviert ist.

8. Regeleinrichtung nach einem der vorangehenden Ansprüche, wobei eine Regelung dahingehend stattfindet, dass die an der ersten Kapazität (C1) anliegende Spannung konstant geregelt wird.

## Claims

1. An optical receiver circuit with
- an illuminable photodiode (10);
- a first pre-amplifier (11) for amplification of the output signal of the illuminable photodiode (10);
- a non-illuminable photodiode (20), which reproduces the electrical behaviour of the illuminable photodiode (10) in the case in which there is no illumination;
- a second pre-amplifier (21) for amplification of the output signal of the non-illuminable photodiode (20);
- a post-amplifier (30) with a first input (30a) and a second input (30b), wherein the signal of the illuminable photodiode (10) amplified in the first pre-amplifier (11) is supplied to the first input (30a), and the signal of the non-illuminable photodiode (20) amplified in the second pre-amplifier (21) is supplied to the second input (30b).
- a control device, which comprises:
o an integrating element with a first capacitance (C1), which is charged and discharged by the output signal of the post-amplifier (30),
o at least one second capacitance (C2), which is switchable via a first switch (S1) to be in parallel with the first capacitance (C1),
o at least one voltage follower (7), via which the voltage applied to the first capacitance (C1) is supplyable to the second capacitance (C2), wherein
o the first switch (S1), is open, if, by the voltage follower (7), the voltage applied to the first capacitance (C1) is supplied to the second capacitance (C2), and
o the first switch (S1), is closed, if the second capacitance (C2) is switched to be in parallel with the first capacitance (C1), and wherein
- one of the pre-amplifiers (21) and the post-amplifier (30) form a control path,
- the output signal of the post-amplifier (30) is supplied to the control device as a control quantity, and
- the output of the control device controls a final control element (23) of the control section.

2. The optical receiver circuit according to Claim 1, wherein the final control element is formed by a controllable power source (23), which provides the current through the pre-amplifier (21) of the control path.

3. The optical receiver circuit according to Claim 1 or 2, wherein in addition control of the amplitude of the signals provided by the preamplifiers (11, 21) takes place.

4. The control device according to one of the Claims 1 to 3, wherein in addition a second switch (S2) is provided between the voltage follower (7) and the second capacitance (C2).

5. The control device according to Claim 4, wherein the first switch (S1), is open and the second switch (S2) is closed, if, by the voltage follower (7), the voltage applied to the first capacitance (C1) is supplied to the second capacitance (C2).

6. The control device according to Claim 4, wherein the first switch (S1), is closed and the second switch (S2) is open, if the second capacitance (C2) is switched to be in parallel with the first capacitance (C1).

7. The control device according to one of the previous claims, wherein the voltage follower (7) is deactivated if the second capacitance (C2) is switched to be in parallel with the first capacitance (C1).

8. The control device according to one of the previous claims, wherein control takes place to the effect that the voltage applied to the first capacitance (C1) is controlled to be constant.

## Revendications

1. Circuit optique de récepteur avec
- une photodiode luminescente (10) ;
- un premier préamplificateur (11) pour amplifier le signal de sortie de la photodiode luminescente (10) ;
- une photodiode non luminescente (20), qui reproduit le comportement électrique de la photodiode luminescente (10) dans le cas sans luminescence ;
- un deuxième préamplificateur (21) pour amplifier le signal de sortie de la photodiode non luminescente (20) ;
- un post-amplificateur (30) avec une première entrée (30a) et une deuxième entrée (30b), le signal de la photodiode luminescente (10) amplifié dans le premier préamplificateur (11) étant acheminé à la première entrée (30a) et le signal de la photodiode non luminescente (20) amplifié dans le deuxième préamplificateur (21) étant acheminé à la deuxième entrée (30b), et
- un dispositif de réglage comprenant :
o un élément intégrant avec une première capacité (C1) chargée et déchargée par le signal de sortie du post-amplificateur (30),
o au moins une deuxième capacité (C2) qui est commutable parallèlement à la première capacité (C1) via un premier commutateur (S1),
o au moins un étage suiveur (7) via lequel la tension de la deuxième capacité (C2) adjacente à la première capacité (C1) peut être acheminée,
o le premier commutateur (S1) étant ouvert quand la tension de la deuxième capacité (C2) adjacente à la première capacité (C1) est acheminée au moyen de l'étage suiveur (7), et
o le premier commutateur (S1) étant fermé quand la deuxième capacité (C2) est commutée parallèlement à la première capacité (C1) ; et
- un des préamplificateurs (21) et des post-amplificateurs (30) formant un système réglé,
- le signal de sortie du post-amplificateur (30) étant acheminé au dispositif de réglage en tant que grandeur de réglage, et
- la sortie du dispositif de réglage régulant un composant (23) de réglage du système réglé.

2. Circuit optique de récepteur selon la revendication 1, le composant de réglage étant formé par une source (23) de courant réglable qui amène le courant à travers le préamplificateur (21) du système réglé.

3. Circuit optique de récepteur selon la revendication 1 ou 2, un réglage de l'amplitude des signaux amenés à travers les préamplificateurs (11, 21) intervenant en outre.

4. Dispositif de réglage selon l'une des revendications 1 à 3, un deuxième commutateur (S2) étant prévu en outre entre l'étage suiveur (7) et la deuxième capacité (C2).

5. Dispositif de réglage selon la revendication 4, le premier commutateur (S1) étant ouvert et le deuxième commutateur (S2) étant fermé quand la tension de la deuxième capacité (C2) adjacente à la première capacité (C1) est acheminée au moyen de l'étage suiveur (7).

6. Dispositif de réglage selon la revendication 4, le premier commutateur (S1) étant fermé et le deuxième commutateur (S2) étant ouvert quand la deuxième capacité (C2) est commutée parallèlement à la première capacité (C1).

7. Dispositif de réglage selon l'une des revendications précédentes, l'étage suiveur (7) étant désactivé lorsque la deuxième capacité (C2) est commutée parallèlement à la première capacité (C1).

8. Dispositif de réglage selon l'une des revendications précédentes, un réglage consistant en ce que la tension adjacente à la première capacité (C1) est réglée de façon constante.
